# EUROPEAN PATENT SPECIFICATION

(11) **EP 2 933 172 B1**
(45) Date of publication and mention of the grant of the patent: **15.03.2017**
(21) Application number: 14164528.3
(22) Date of filing: 14.04.2014
(51) Int. Cl.: B62D 47/00, B62D 53/00, B62D 53/02, B62D 53/08

(54) **Articulated vehicle for transporting passengers with an improved driving system**
Gelenkiges Fahrzeug zur Personenbeförderung mit verbessertem Antriebssystem
Véhicule articulé pour le transport de passagers avec un système d'entraînement amélioré

(43) Date of publication of application: 21.10.2015
(73) Proprietor: Iveco France S.A., 69200 Vénissieux (FR); Institut Français des Sciences et Technologies des Transports, de l'Aménagement et des Réseaux, 77447 Marne la Vallee Cedex 2 (FR)
(72) Inventor: Gendre, Guy Pierre, 69003 Lyon (FR); Stoehr, Alexandre, 69800 Saint Priest (FR); Jeanneret, Bruno, 69001 Lyon (FR); Rey, Philippe, 69320 Feyzin (FR)
(74) Representative: Franzolin, Luigi

(56) References cited:
- WO-A1-2011/005180
- DE-A1- 3 246 182
- GB-A- 2 185 222
- US-A- 4 320 811
- US-A1- 2003 205 422
- US-A1- 2004 226 760
- US-A1- 2013 149 093

## Description

### Field of the invention

The present invention concerns the technical field of the vehicles dedicated to the transport of passengers, in particular the field of articulated vehicles typically used in public transportation. More in detail the present invention relates to an articulated bus comprising a front carriage, provided with a main driving system of the vehicle, and at least a rear carriage provided with an auxiliary driving system of the vehicle which is completely independent from the main driving system.

### Description of the prior art

Among the vehicles for the transportation of passengers, the articulated buses have a higher passenger capacity and for this reason their use appears particularly interesting in public transportation. The present standards impose around eight people per square meter. Hence, when there is the need to transport 100 to300 people, the articulated buses appear to be clearly an advantageous solution.

It is known that an articulated bus usually comprises at least a first carriage and a second carriage connected to each other by means of an articulated joint which allows relative movements between the two carriages. In the case of a bi-articulated bus (or double-articulated bus) the vehicle comprises three carriages/compartments instead of two. This normally involves the addition of extra axles, for example for the first carriage, and a second articulated joint between the second carriage and the third carriage. Due to their extended length, the bi-articulated buses are usually used on high frequency core routes or bus rapid transit scheme rather than conventional bus routes.

The main advantage of the articulated buses, especially of the bi-articulated kind, is that their use allows to reduce the numbers of drivers needed to run a service for a specific number of people. It is usually much more cost-efficient to run a bi-articulated bus with one driver, than, for example, to run two smaller conventional buses which provide the same total number of seats.

Articulated buses with two carriages can reach approximately 18 metres in length, while a bi-articulated bus can reach a length of 24-25 meters with a capacity of 200-300 people. The manufacturers of buses normally try to find solution to increase the surface available for the passengers. This is because a larger surface is an important factor for the sales. However the considerable length of the articulated and bi-articulated buses translates in a corresponding extra weight and therefore into the need of installing a driving system able to guarantee the power sufficient to move the entire vehicle. On this regard, over the years, many driving systems have been proposed by the manufacturers of these vehicles. According to a first known solution implemented mainly on the articulated buses with two carriages, the first carriage (or leading carriage) is provided with a driven axle which is driven by a thermal engine mounted on the second carriage (trailing carriage). A drive line extending between the two carriages is provided to connect the driven axle to the thermal engine. Usually such drive line comprises at least a cardan shaft which allows to bypass the articulation joint between the two carriages.

As to the driving systems of the bi-articulated vehicles (three carriages connected by two articulated joints), they are normally based on a diesel thermal engine installed on the rear carriage of the vehicle and mechanically connected to a drive axle of the central carriage and/or to a drive axle of the front carriage. Also in this case, the mechanical connection between the engine and the driving axles is performed by means of cardan shafts. The above disclosed solutions as well as other similar known solutions, have many drawbacks the first of which is the position of the thermal engine with respect to the driving axles. Indeed the thermal engine is usually located on one of the carriages, while the drive axle or the driving axles are mounted on a different carriage. Due to this layout, it is actually necessary to provide a drive line which extends along a considerable length. This aspect is critical for the design of the entire vehicle. Furthermore, the length of the drive line translates into a high risk of failures and considerable power losses. Another drawback of the above known solutions is the effective motive power provided substantially only by a thermal engine. Clearly the size of the latter has to be sufficient to move the entire vehicle. However it has been noted, that in many cases the manufacturers tend to use diesel engines having a size similar to that of the common non-articulated buses. Consequently the extra weight of the articulated bus gives rise to a reduction of speed and acceleration and in general a reduction of the driving performances. For this reason the articulated buses are used substantially only on flat routes. In particular it has been noted that in many cases, due to the actual configuration of their driving system, if the articulated or bi-articulated vehicles are used in cities with inclines, the engines are prone to an overheating and they fail at showing an unacceptable duration.

Another drawback of the traditional solutions, deriving mainly from the presence of the drive line extending between the carriages, is that the same carriages cannot be actually separated. That means the use of an articulated vehicle is advantageous for the transportation of passengers only during the peak hours, but it becomes disadvantageous when the number of people decreases, for example under one hundred units, i.e. when the vehicles move with a low load of passengers. In order to overcome this drawback, at present the traditional solution is to increase the fleet of vehicles at disposal and to use the articulated bus only during the peak hours. For a transport company, that means the need to have a reserve of vehicles and also a large number of drivers. This aspect is critical nowadays in terms of costs and affects negatively the exploitation and the quality of the services.

It is obvious then that there is a strong need to provide new solutions to overcome the above-mentioned drawbacks. In particular it appears evident that the driving systems commonly used on these vehicles have a configuration which limits the possible exploitation of the vehicles.

Therefore it is the main object of the present invention to provide an articulated vehicle for the transportation of passengers which allows to overcome the drawbacks above indicated. Within this object a first purpose is to provide an articulated vehicle which can be exploited also for routes with inclines. Another purpose of the present invention is to provide an articulated vehicle having performances, in terms of speed and acceleration, comparable with those of common non-articulated vehicles. Another purpose of the present invention is to provide an articulated vehicle for the transportation of passengers which is reliable and easy to manufacture at competitive costs.

US2004226760 and US4320811 disclose articulated vehicles and relating driving systems whose features define the preamble of claim 1.

### Summary of the invention

The present invention relates to an articulated vehicle, for the transport of passengers, which comprises at least a front carriage, provided with at least a steered-front axle and a first driven axle, and at least a first rear carriage. The latter is connected to the first carriage by a first articulated joint and comprises at least a first operative axle. According to the invention, the front carriage comprises a main driving system of said vehicle which drives the first driven axle. Said main driving system comprises at least a thermal engine and a mechanical transmission which connects said thermal engine to the first driven axle. Further according to the invention, the first rear carriage comprises a first auxiliary driving system for driving said first operative axle installed on the same first rear carriage. In particular the auxiliary driving system comprises at least a first electric machine operatively coupled to said first operative axle. The auxiliary driving system also comprises an energy storage system electrically connected to said electrical machines.

Advantageously, the present invention provides for an articulated vehicle without any drive line passing from carriage to carriage.

According to a first operation mode the electrical machine operates as an electric generator to charge said energy storage system, while according to a second operation mode the electric machine operates as an electric motor to provide torque to the driven wheels mounted at the ends of said first operative axle.

The claims disclose preferred embodiments of the present invention, forming integral part of the present description.

### Brief description of the drawings

The invention will become fully clear from the following detailed description, given by way of a mere exemplifying and non limiting example, to be read with reference to the attached drawing figures, wherein:
- Fig. 1 shows a lateral view of an articulated vehicle according to the invention;
- Fig. 2 is a schematic view of a leading carriage of an articulated vehicle according to the present invention;
- Figure 3 is a schematic view of a trailing carriage of a vehicle according to the invention;
- Figure 4 is a schematic view of an articulated vehicle according to the invention having three carriages.

The same reference numerals and letters in the figures designate the same or functionally equivalent parts.

### Detailed description of the preferred embodiments

The present invention is relative to an articulated vehicle 1 for the transportation of passengers comprising at least two carriages connected to each other by an articulated joint. In particular for the purposes of the present invention, the expression "articulated vehicle" is used also to indicate a vehicle of the "bi-articulated" kind, i.e. a vehicle comprising three carriages connected to each other by means of two articulated joints.

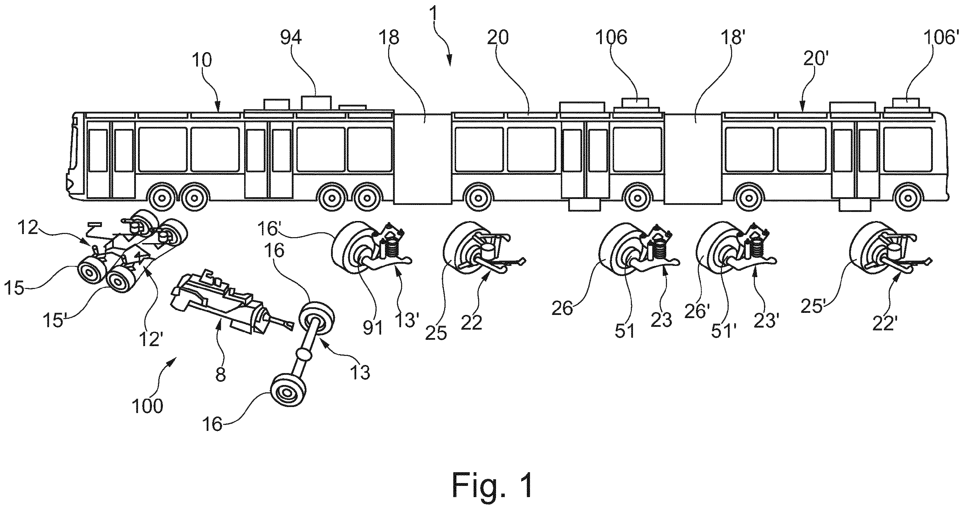

Figure 1 is only a schematic illustration of an articulated vehicle 1 according to the present invention comprising three carriages 10, 20, 20'. More precisely the vehicle of Figure 1 comprises a front carriage 10, a first rear carriage 20 and a second rear carriage 20' according to a typical structure of a bi-articulated vehicle/bus for the transportation of passengers. The front carriage 10 (in the following indicated also with the expression "leading carriage 10") is connected to the first rear carriage 20 (in the following indicated also with the expression "central carriage 20") by means of a first articulated joint 18 which allows a relative movement between the two carriages 10, 20. Similarly the second rear carriage 20' (in the following indicates as also "back carriage 20"') is connected to the central carriage 20 by means of a second articulated joint 18'. According to a typical solution, the carriages 10, 20, 20' are connected each other so that the passengers can move freely from a carriage to another. Moreover the articulated joints 18, 18' are preferably of the separable type so that the leading carriage 10, for example, can be easily separated from the rest of the vehicle 1 so as to be used independently.

As a matter of fact, the leading carriage 10 has to be regarded as an independent vehicle which can be advantageously extended on demand or during the peak hours, i.e. when the number of passengers to be transported increases. The length of the leading carriage 10 can be, for example, of 12 meters. As indicated below, this length can be maintained most of the day and the vehicle can be transformed in an articulated vehicle only when it is actually requested, according to a "modular concept". This allows to exploit at the most the leading carriage 10. An articulated vehicle according to the invention could reach, for example, a length from 15 up to 24 meters.

According to the present invention, the first carriage 10 of the vehicle comprises at least a first steered axle 12, on which a first couple of directional wheels 15 are mounted, and at least a first driven axle 13 on which a first couple of driven wheels 16 are mounted. The second carriage 20 comprises at least an operative axle 23 on which a second couple of driven wheels 26 are mounted. The operative axle 23 is actually a "driven axle" of the second carriage 20 and consequently of the vehicle 1.

According to the invention, on the front carriage 10 a main driving system 100of the vehicle 1 is installed. Said system 100 includes at least a diesel thermal engine , which can be mechanically connected to said first drive axle 13 of the first carriage 10 for driving the driven wheels 16 thereon installed. Moreover according to the invention the second carriage 20 comprises a first auxiliary driving system 105 of the vehicle 1 which is independent from the main driving system 100.

Said first auxiliary driving system 105 is operatively connected to the operative axle 23 of the second carriage 20 for driving the corresponding driven wheels 26 mounted on the same operative axle 23. Said first auxiliary driven system 105 comprises at least one electrical machine operatively coupled with said first operatively axle 23. Preferably said first auxiliary driven system 105 comprises a first electrical machine 51 and a second electrical machine 52 located at corresponding ends of said operative axle 23. The first auxiliary driving system 105 also comprise a energy storage system 106 electrically connected to the electrical machines 51, 52.

According to at least a first operation mode of the first auxiliary driven system 105, the electrical machines 51, 52 operate as electrical generators to charge the energy storage system 106. According to a second possible operation mode the electrical machines 51, 52 operate as electrical motors in order to provide torque to the driven wheels 26 of the operative axle 23. In particular said second operation mode is advantageously activated when an increase of power/torque is required to move the vehicle 1, for example when the vehicle 1 approaches a slope or when the vehicle 1 has to be moved after a stop. Instead the first operation mode of the first auxiliary system 105 can be advantageously activated when the power provided by the main driving system 100, located on the first carriage 10, is sufficient to move the entire vehicle 1 or during a breaking phase of the same vehicle. In this regard, the first operation mode (electrical machines as generators) can be activated also during the running of a vehicle on a flat surface. For example before the vehicle approaches an ascent, if the energy storage system 106 is not fully charged, the electrical machines 51,52 can be used as generators for charging the battery as much as possible. When the ascent begins, the electrical machines 51,52 can be advantageously activated as electric motors (second operative mode) so as to provide the greatest possible torque by exploiting the complete charge of the energy storage system 106.

On the basis of what above, some differences with respect to the prior art are evident. Firstly the main driving system 100 is installed on the first carriage 10 and not in the rear carriages 20, 20' of the vehicle 1. Secondly the main driving system 100 and the first auxiliary system 105 are completely independent from each other. In particular there is not a drive line or any other mechanical transmission which develops between the carriages 10, 20 as provided in most of the known solutions. That means it is possible to vary easily and quickly the transportation capacity of the vehicle. Indeed, it is possible to add one or more rear carriages 20, 20' to the leading carriage 10 according to the number of passengers to be transported in particular during the peak hours. In other words the leading carriage 10 can be easily transformed from an "independent vehicle" to an articulated vehicle according to "a modular concept". This allows to exploit as much as possible the potentiality of the vehicle. Indeed the modularity of the vehicle allows to contain the "fleet" of vehicles precisely because the leading carriage 10 can be used as an independent transport vehicle (with a limited length) or in combination with other carriages 20,20' as an articulated vehicle. Therefore the leading carriage 10 can be used on different routes also in urban centers or wherein an articulated bus having more carriages cannot move due to its length.

Furthermore, the lack of a drive line/mechanical transmission between the carriages 10, 20 also allows to improve the surface available for the passengers and therefore the capacity of the vehicle. Indeed the rear part of the first carriage 10, as well as of the rear carriages 20,20', can be advantageously flatter than what obtainable with the traditional solutions.

Moreover the first auxiliary system 105 of the rear carriage 20 provides an extra-power on demand which allows the vehicle 1 to be more reactive for example in presence of inclines of the route. As a matter of fact, the presence of the first auxiliary system 105 as above indicated allows to improve the performance of the vehicle in terms of speed and acceleration.

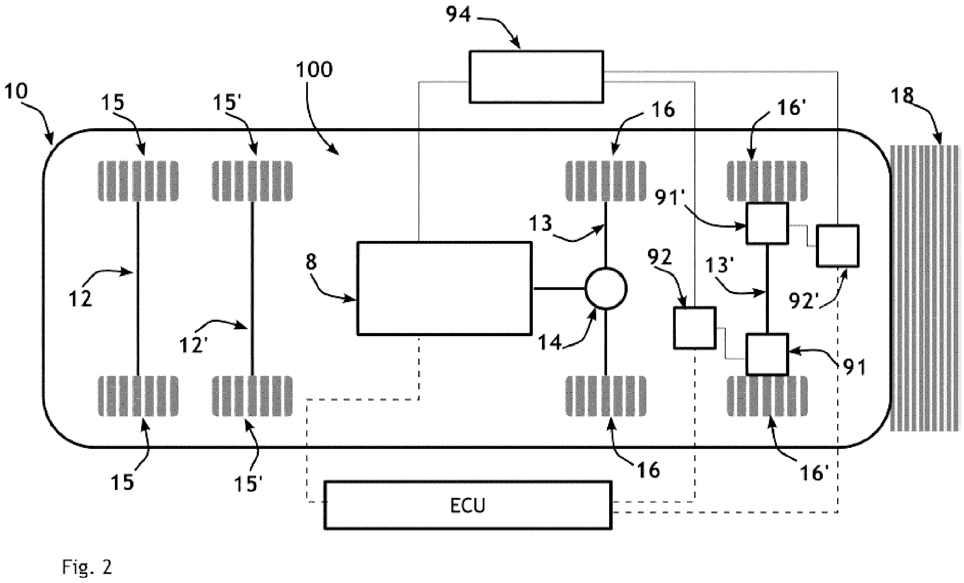

Figure 2 is a schematic view relative to a preferred embodiment of the first carriage 10 which comprises also a second steered-axle 12' and a second driven axle 13' which are respectively located in a position close to the first steered-axle 12 and to the first driven axle 13. The second steered axle 12' comprises a second couple of directional wheels 15'. Also the second driven axle 13' comprises a second couple of driven wheels 16' each mounted at one end of the same second driven axle 13'. According to a preferred embodiment of the invention the wheels 15, 15' mounted on the steered axles 12, 12' have a diameter reduced (i.e. 17 inches of diameters) with respect to the wheels 16, 16' mounted on the drive axles 13, 13'. This advantageously allows to improve the maneuverability of the vehicle. This translates into the possibility to arrive easily into urban centers. Moreover the use of wheels having a reduced diameter allows to increase also the surface available for the passengers, i.e. the capacity of transportation of the first carriage 10. Moreover according to a preferred embodiment, also the driven wheels 16' mounted on the second driven axle 13' are advantageously steering while the wheels 16 of the first driven axle are not steering. This solution allows to exploit the first driven axle 16 as a sort of "center of rotation" fixed with respect to the vehicle. This allows to improve the maneuverability since the other steering wheels 15, 15', 16', mounted on the other axis 12,12', 13', are oriented around such "fixed point" without overcoming a standardized radius (about 11.50 meters).

With reference again to the scheme of Figure 2, the main driving system 100 installed on the first carriage 10 can be:
- an assembly of an electrically driven system 91, 91' and a mechanical drive train 8 or
- an assembly of an electrically driven system 91, 91' and any kind of hybrid driving system. In this case both 8 and 91, 91' are connected to the energy storage system 94.. In particular Figure 2 shows in detail the architecture of such hybrid system 100 which makes the first carriage 10 usable as an independent vehicle. Indeed, as above, indicated there is not a mechanical transmission between the first carriage 10 and the rear carriages 20, 20'. As a matter of fact the first rear carriage 20 can be quickly connected and disconnected to the first carriage 10 by means of the first articulated joint 18. Such simplification of the connection between the carriages derives from the particular architecture of the driving systems of the carriages. As a matter of fact, the mutual connection/disconnection of the carriages 10,20,20' is substantially a rapid and automatic operation.

Therefore during the peak hours it is possible to exploit an articulated vehicle with a high capacity of transportation, for example 300 people. When the peak hour ends, the capacity of the vehicle can be reduced, for example to 100 people. This can be reached by disconnecting the rear carriages and by using the first carriage 10 as independent vehicle.

The electrical assembly is installed on the first carriage 10 mainly in order to provide torque to the drive wheels 16' of the second driven axle 13'. More in detail the electrical assembly comprises a couple of electrical apparatuses 91, 91' each of which arranged at one end of the second driven axle 13' to be operatively connected to a corresponding driven wheel 16'.

The apparatuses 91, 91' can work both as electric motors and as electrical generators. In particular, the apparatuses 91, 91' can advantageously work as "generators" during a braking phase of the vehicle 1 according to a regenerative braking mode.

As above indicated the electric assembly comprises a energy storage system 94 electrically connected to the electrical apparatuses 91, 91'.

During a regenerative braking mode of the vehicle, the energy storage system can be charged by the electrical apparatuses 91, 91' which work as "generators". On the contrary in the case of a power/torque demand, the energy storage system provides electrical energy to the electrical apparatuses 91, 91'.

With reference again to Figure 2, the electrical assembly also comprises first actuating means 92 for actuating a first electrical apparatus 91 and second actuating means 92' for actuating the second electrical apparatus 91'. The first actuating means 92 and the second actuating means 92', are electrically connected to the energy storage system94 and are controlled by an electronic central unit (ECU) 300 which controls the main driving system 100.

The electrical apparatuses 91, 91' can be operated as electric motors independently from each other in order to allow the corresponding wheels 16' of the second driven axle 13' of the leading carriage 10 to reach different speeds. This solution allows to simplify the structure of the second driven axle 13' which does not need a differential gearbox nor any mechanical link between the wheels 16'. Moreover the electric apparatuses 91, 91' can be operated independently from the main drive train 8. In other words, the central unit 300 controls the electric apparatuses 91, 91', via said actuating means92, 92', as a function of the operative condition of the vehicle 1. In this regard, according to a zero emission vehicle operating mode, wherein the thermal engine is switched off, the electrical apparatuses 91, 91' work as electric motors. However the electrical apparatuses 91, 91'can work as electric motors also when the thermal engine is switched on in the case of a high torque/power demand.

As already indicated above, according to a regenerative braking mode or when the torque/power demand for moving the vehicle is relatively low, the electrical apparatuses 91, 91'can work as generators for charging the energy storage system94.

On the basis of what above, one of the main advantages of the first carriage according to the invention is that of having a "mechanical axis" (the first drive axle 13), driven by a mechanical transmission, and an "electrical axis" (the second driven axle 13') driven by means of the electrical assembly. More in detail one of the advantages of this invention is that the mechanical axis is not mechanically coupled to the electrical axis. Consequently the drive train 8 can be advantageously installed in the central part of the vehicle. That means it is possible to have a flat floor on the back part of the vehicle which translates, for example, in a higher capacity of transportation as above indicated. Moreover, it has to be noted that on the basis of the number of passengers to be transported in the vehicle, it is possible to change the operative mode of the main driving system of the first carriage, especially when the latter is used as an independent vehicle.

Whatever the configuration of the vehicle is (leading carriage 10 alone, or with one or two trailing carriage 20, 20'), the leading carriage10 and especially the main leading system 100can operate the vehicle alone.

For example, the main driving system (100) can work alone on the mechanical driven axle (13) only or on the electrical axle (13') only or on both mechanical driven axle (13) and electrical driven axle (13') together.

This functional versatility of the main driving system allows to face in the best way any possible working condition.

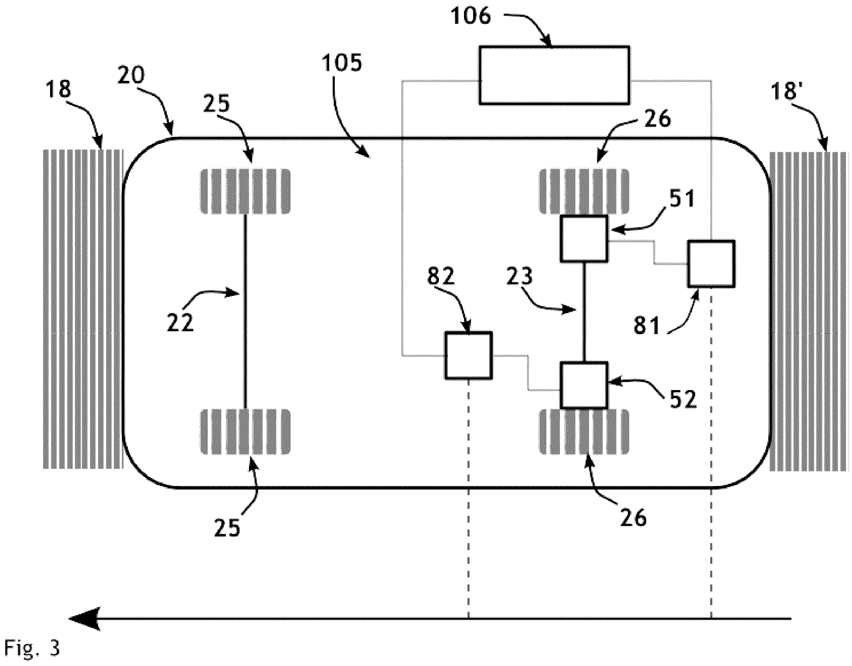

Figure 3 is a schematic view showing the first auxiliary driving system of the vehicle installed on the central carriage 20. In particular the latter can comprise a further axle 22 located on the front part of the carriage 20. However the front axle 22 can be present or not depending on the size of the vehicle. For example, in the case of an articulated bus with two carriages having a length below 15 meters, the front axle 22 could be actually omitted.

With reference again to Figure 3, the first auxiliary driving system comprises first actuating means 81 of the first electrical machine 51 and second actuating means 82 of the second electric machine 52. These actuating means 81, 82 are electrically communicating with the ECU 300 of the vehicle 1 which controls their operation.

As above indicated according to a first possible operative mode of the auxiliary driving system, the electrical machines 51, 52 operate as electrical generators, while according to a second operative mode they operate as electrical motors. For this reason the actuating means 81, 82 comprise at least an inverter module for changing the operative condition of the corresponding electrical machine 51, 52.

The operative mode of the first auxiliary system is established by the ECU 300 as a function of the running conditions of the vehicle 1. As an example, when an increase of the power/torque is required, the ECU 300 send a first control signal to the actuating means 81, 82 due to which the electrical machines 51, 52 operate as electrical motors. Instead when the power/torque provided by the main driving system of the first carriage 10 is sufficient to run the vehicle, then the ECU send a second control signal to the actuating means due to which the electrical machines 51, 52 operate as electrical generators in order to charge the energy storage system 106. It has to be noted, that according to this control strategy, also when the vehicle is running on a flat route (i.e. when the vehicle can be actually towed only by the main driving system), then the electrical machines 51,52 can operate as electrical generators. This solution allows to maintain the energy storage system constantly charged and therefore totally independent from the energy storage system 94 installed on the first carriage 10. Therefore also from this point of view, the first auxiliary driving system 105 installed on the second carriage 20 is completely independent from the main driving system 100 on the first carriage 10. In this regard, according to a preferred embodiment of the invention the energy storage system 106 comprises modules of super capacitors which are particularly useful to recover energy especially during the braking phase of the vehicle.

The electrical apparatuses 51, 52 can be operated as electric motors independently from each other in order to allow the corresponding wheels 26 of the driven axle 23 of the trailing carriage 20 to reach different speeds. This solution allows to simplify the structure of the driven axle 23 which does not need a differential gearbox nor any mechanical link between the wheels 26.

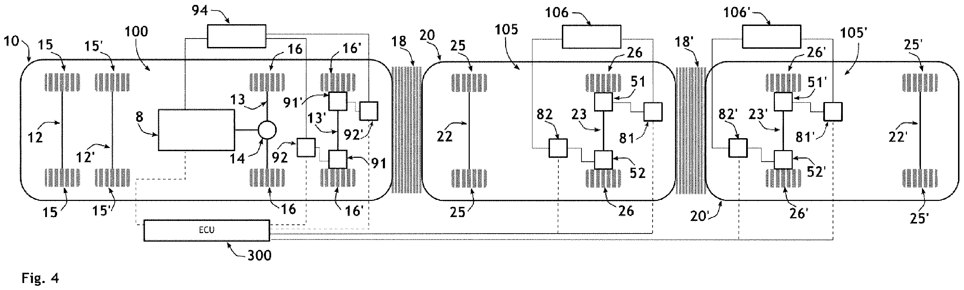

Figure 4 is a schematic view which shows overall the driving system of the articulated bus with three carriages 10, 20, 20' according to the present invention. As shown also the back carriage 20' comprises an operative axle 23' and a further axle 22' similarly to the central carriage 20. However in this case the operative axle 23' and the further axle 22' are located respectively in the front part and in the rear part of the back carriage 20'. This arrangement is substantially inverse to that provided for the central carriage 20.

The third carriage 20' comprises a second auxiliary driving system 105' which is structurally and conceptually similar to that of the central carriage 20. In particular also the second auxiliary driving system 105' comprises a couple of electrical machines 51', 52' each of which mounted at one of the ends of the operative axle 23'. Also in this case the electrical machines 51', 52' can operate both as electric motors and as electrical generator as a function of the running condition.

The second auxiliary system 105' also comprises a second energy storage system 106', third actuating means 81' to actuate the third electric machines 51' and forth actuating means 82' to actuate the forth electric machine 52'. Similarly to what provided for the first auxiliary driving system 105 installed on the central carriage 20, also the third actuating means and the fourth actuating means are controlled by the ECU 300 of the vehicle 1 as a function of the running conditions of the vehicle. Consequently the above considerations for the first auxiliary driving system 105 are still valid also for the second auxiliary system 105'. In particular it has to be noted that the second auxiliary system 105' is completely independent from the first auxiliary system 105 of the second carriage 20 and from the main system 100 provided on the first carriage 10.

Therefore according to the invention the main driving system 100 installed on the first carriage 10 is always activated while the auxiliary systems 105, 105' can be activated or deactivating depending on the charging state of the energy storage system 106, 106' and/or as a function of the torque/power demand. More in detail the electrical machines 51, 52 of the first auxiliary driving system 105 and the electrical machines 51', 52' of the second auxiliary driving system 105' are operated as electrical motors for high torque/power demand while they are operated as electrical generators for energy storage system charging, especially but not exclusively during the braking phase of the vehicle and for low torque/power demand.

On this purpose it has to be noted that the rear carriages 20, 20' are equipped so as to be coupled with standard vehicles. There when a rear carriage 20, 20' is coupled, the maximum braking energy is advantageously absorbed by the rear carriages themselves and not by the leading carriages. This allows a better exploitation of the braking energy. This principle is valid for one rear carriage, but also for two rear carriages preferably for vehicle having a maximum length of 24 meters and a maximum weight of 40 tons.

Further implementation details will not be described, as the man skilled in the art is able to carry out the invention according to the appended claims starting from the teaching of the above description.

## Claims

1. Articulated vehicle (1) for transporting passengers, said vehicle (1) comprising at least:
- a front carriage (10) comprising at least a steered-front axle (12) and at least a first driven axle (13);
- at least a rear carriage (20) connected to said front carriage (10) by a first articulated joint (18), said first rear carriage (20) comprising at least a first operative axle (23), wherein said front carriage (10) comprises a main driving system comprising a thermal engine(100) of said vehicle (1) which drives said first driven axle (13), said main driving system (100) comprising at least a drive train (8) operatively connected to said first driven axle (13) and **characterized in that** the articulated vehicle is without any drive line passing from carriage to carriage and is modular comprising one or more rear carriages (20),
wherein each rear carriage (20, 20') comprises a first auxiliary driving system (105, 105') for driving said first operative axle (23, 23') of said rear carriage (20, 20'), said auxiliary driving system (105, 105') comprising:
- at least one electric machine (51, 52, 51', 52') operatively coupled to said first operative axle (23, 23');
- an energy storage system (106, 106') electrically connected to said electric machine (51, 52, 51', 52'), wherein, according to a first operation mode of said auxiliary driven system (105, 105'), said at least one electrical machine is operated as an electric generator to charge said energy storage system and wherein according to a second operation mode said at least one electrical machine is operated as electric motor to provide power to said first operative axle and **in that** said front carriage comprises a second operative driven axle (13') and at least one electrical apparatus (91, 91') connected to said second operative driven axle (13') to provide torque to said to provide torque to said second operative driven axle (13'),
and an energy storage system (94) electrically connected to the electrical apparatus (91, 91'), wherein during regenerative braking mode of the vehicle, the energy storage system is charged by the electrical apparatus (91, 91') working as generator and on power/torque demand, the energy storage system provides electrical energy to the electrical apparatus.

2. Articulated vehicle according to Claim 1, wherein said auxiliary driving system (105) comprises two electric machines (51, 52) each of which arranged at one end of said first operative axle (23).

3. Articulated vehicle (1) according to claim 1 or 2, **characterized in that** said articulated vehicle comprises a first (20) and second rear carriage (20') connected to the first rear carriage (20) by means of a second articulated joint (18'), said second rear carriage (20') comprising a second operative axle (23') and **characterized in that** said second rear carriage (20') comprises a second auxiliary driving system (105') for driving said second operative axle (23') of said second rear carriage (20'), said second auxiliary driving system (105') comprising:
- at least one electric machine (51', 52') operatively coupled to said second operative axle (23');
- a second energy storage system (106') electrically connected to said at least one electrically machine (51', 52') of said second auxiliary driving system, wherein according to a first operation mode of said second auxiliary driven system (105') said at least one electrical machine (51', 52') is operated as an electric generator to charge said second energy storage system(106') and wherein according to a second operation mode said at least one electrical machine (51', 52') is operated as an electric motor to provide power to said second operative axle (23').

4. Articulated vehicle according to Claim 3, wherein said second auxiliary driving system (105') comprises two electric machines (51', 52') each of which arranged at one end of said second operative axle (23').

5. Articulate vehicle (1) according to claim 3 or 4, wherein said operation modes of said first auxiliary driving system (105) can be activated/deactivated independently from the operation modes of said second auxiliary driving system (105').

6. Articulated vehicle (1) according to any one of the claims 2-5,
wherein said first auxiliary driving system (105) comprises first actuating means (81) and second actuating means (82) respectively for actuating a first electric machine (51) and a second electric machine (52) of said first couple of said electric machines (51,52), said first actuating means (81) and said second actuating means (82) being electrically communicating with an electronic central unit ECU (300) of said vehicle so as to be operated as a function of the running conditions of said vehicle (1).

7. Articulated vehicle (1) according to any one of the claims 4-6, wherein said second auxiliary driving system (105') comprises third actuating means (81') and fourth actuating means (82') respectively for actuating a third electric machine (51') and a fourth electric machine (52') of said second couple of said electric machines (51',52'), said third actuating means (81') and said fourth actuating means (82') being electrically communicating with an electronic central unit ECU (300).

8. Articulated vehicle (1) according to claim 6 or 7, wherein said ECU (300) is adapted to said actuating means said actuating means (81,82) according to the running conditions of said vehicle (1) :
- when an increase of power/torque is required, then said electronic control unit (300) sends a first control signal to said actuating means (81,82) and /or said actuating means (81',82') of said first auxiliary driving system (105) and/or of said second auxiliary driving system (105') following which said electrical machines (51,52) and/or said electrical machine(51',52') operate as electric motors; and:
- when the power/torque provided by said main driving system is sufficient to run said vehicle (1), then said electronic control unit (300) send a second control signal to said actuating means (81,82) and/or said actuating means (81',82') of said first auxiliary driving system (105) and/or of said second auxiliary driving system (105') following which said electrical machines (51,52) and/or said electrical machines (51', 52') operate as electrical generators for charging said energy storage system (106) and/or said energy storage system (106').

## Patentansprüche

1. Gelenkiges Fahrzeug (1) zur Personenbeförderung, welches Fahrzeug (1) zumindest umfasst:
- einen vorderen Wagen (10), umfassend zumindest eine vordere Lenkachse (12) und zumindest eine hintere angetriebene Achse (13);
- zumindest einen hinteren Wagen (20), der mit dem vorderen Wagen (10) durch ein erstes Gelenk (18) verbunden ist, wobei der erste hintere Wagen (20) zumindest eine erste Betriebsachse (23) umfasst, wobei der vordere Wagen (10) ein Hauptantriebssystem umfasst, umfassend eine Verbrennungsmotor (100) des Fahrzeugs (1), der die erste angetriebene Achse (13) antreibt, wobei das Hauptantriebssystem (100) zumindest einen Antriebsstrang (8) umfasst, der operativ mit der ersten angetriebenen Achse (13) verbunden ist, **dadurch gekennzeichnet, dass** das gelenkige Fahrzeug keinen Antriebsstrang aufweist, der von Wagen zu Wagen verläuft, und modular mit einem oder mehreren hinteren Wagen (20) aufgebaut ist,
wobei jeder hintere Wagen (20,20') ein erstes Hilfsantriebssystem (105,105') zum Antrieb der ersten Betriebsachse (23,23') des hinteren Wagens (20,20') umfasst, welches Hilfsantriebssystem (105,105') umfasst:
- zumindest eine elektrische Maschine (51,52,51', 52'), die operativ mit der ersten Betriebsachse (23,23') gekoppelt ist;
- ein Energiespeichersystem (106,106'), das elektrisch mit der elektrischen Maschine (51,52,51', 52') verbunden ist, wobei gemäß einer ersten Betriebsart des Hilfsantriebssystems (105,105') die zumindest eine elektrische Maschine als ein elektrischer Generator betrieben wird, zum Laden des Energiespeichersystems, und die zumindest eine elektrische Maschine gemäß einer zweiten Betriebsart als elektrischer Motor zur Bereitstellung von Leistung für die erste Betriebsachse betrieben wird,
und wobei der vordere Wagen eine zweite angetriebene Betriebsachse (13') und zumindest eine elektrische Vorrichtung (91,91') umfasst, die mit der zweiten angetriebenen Betriebsachse (13') zur Ausübung eines Drehmoments auf die zweite angetriebene Betriebsachse (13') verbunden ist, und eine Energiespeichersystem (94), das elektrisch mit der elektrischen Vorrichtung (91,91') verbunden ist, wobei während eines regenerativen Bremsmodus des Fahrzeugs das Energiespeichersystem durch die elektrische Vorrichtung (91,91') aufgeladen wird, welche als Generator wirkt, und bei Abfrage von Leistung/Drehmoment das Energiespeichersystem elektrische Energie der elektrischen Vorrichtung zur Verfügung gestellt.

2. Gelenkiges Fahrzeug gemäß Anspruch 1, wobei das Hilfsantriebssystem (105) zwei elektrische Maschinen (51,52) umfasst, von welchen jede an einem Ende der ersten Betriebsachse (23) angeordnet ist.

3. Gelenkiges Fahrzeug (1) gemäß Anspruch 1 oder 2, **dadurch gekennzeichnet, dass** das gelenkige Fahrzeug zumindest einen ersten (20) und einen zweiten hinteren Wagen (20') umfasst, welcher mit dem ersten hinteren Wagen (20) durch ein zweites Gelenk (18') verbunden ist, welcher zweite hintere Wagen (20') eine zweite Betriebsachse (23') umfasst, und ferner **dadurch gekennzeichnet, dass** der zweite hintere Wagen (20') zumindest ein zweites Hilfsantriebssystem (105') zum Antrieb der zweiten Betriebsachse (23') des zweiten hinteren Wagens (20') umfasst, welches zweite Hilfsantriebssystem (105') umfasst:
- zumindest eine elektrische Maschine (51',52'), die operativ mit der zweiten Betriebsachse (23') gekoppelt ist;
- ein zweites Energiespeichersystem (106'), das elektrisch mit der zumindest einen elektrischen Maschine (51',52') des zweiten Hilfsantriebssystems verbunden ist, wobei gemäß einer ersten Betriebsart des zweiten Hilfsantriebssystems (105') die zumindest eine elektrische Maschine (51',52') als ein elektrischer Generator zum Laden des zweiten Energiespeichersystems (106') betrieben wird und gemäß einer zweiten Betriebsart die zumindest eine elektrische Maschine (51',52') als elektrischer Motor zur Bereitstellung von Leistung für die zweite Betriebsachse (23') betrieben wird.

4. Gelenkiges Fahrzeug (1) gemäß Anspruch 3, wobei das zweite Hilfsantriebssystem (105') zwei elektrische Maschinen (51'52') umfasst, von denen jede an einem Ende der zweiten Betriebsachse (23') angeordnet ist.

5. Gelenkiges Fahrzeug (1) gemäß Anspruch 3 oder 4, bei welchem die Betriebsarten des ersten Hilfsantriebssystems (105) unabhängig von den Betriebsarten des zweiten Hilfsantriebssystems (105') aktiviert/deaktiviert werden können.

6. Gelenkiges Fahrzeug (1) gemäß einem der Ansprüche 2 bis 5, bei welchem das erste Hilfsantriebssystem (105) erste Betätigungsmittel (81) und zweite Betätigungsmittel (82) jeweils zur Betätigung einer ersten elektrischen Maschine (51) und einer zweiten elektrischen Maschine (52) des ersten Paars elektrischer Maschinen (51,52) umfasst, welche ersten Betätigungsmittel (81) und welche zweiten Betätigungsmittel (82) elektrisch mit einer elektrischen Zentraleinheit (EZE) (300) des Fahrzeugs kommunizieren, so dass sie als Funktion der Fahrbedingungen des Fahrzeugs (1) betrieben werden können.

7. Gelenkiges Fahrzeug (1) gemäß einem der Ansprüche 4 bis 6, bei welchem das zweite Hilfsantriebssystem (105') dritte Betätigungsmittel (81') und vierte Betätigungsmittel (82') jeweils zur Betätigung einer dritten elektrischen Maschine (51') und einer vierten elektrischen Maschine (52') des zweiten Paars elektrischer Maschinen (51',52') umfasst, welche dritten Betätigungsmittel (81') und welche vierten Betätigungsmittel (82') elektrisch mit einer elektronischen Zentraleinheit (EZE) (300) kommunizieren.

8. Gelenkiges Fahrzeug (1) gemäß Anspruch 6 oder 7, bei welchem die (EZE) (300) wie folgt an die ersten Betätigungsmittel der Betätigungsmittel (81,82) gemäß der Fahrbedingungen des Fahrzeugs (1) angepasst ist:
- wenn ein Zuwachs an Leistung/Drehmoment erforderlich ist, dann sendet die elektronische Steuereinheit (300) ein erstes Steuersignal an die Betätigungsmittel (81,82) und/oder die Betätigungsmittel (81',82') des ersten Hilfsantriebssystems (105) und/oder des zweiten Hilfsantriebssystems (105'), demzufolge die elektrischen Maschinen (51,52) und/oder die elektrischen Maschinen (51',52') als elektrische Motoren laufen; und
- wenn die vom Hauptantriebssystem zur Verfügung gestellte Leistung/das Drehmoment zum Fahren des Fahrzeugs (1) ausreichend ist, dann sendet die elektronische Steuereinheit (300) ein zweites Steuersignal an die Betätigungsmittel (81,82) und/oder die Betätigungsmittel (81',82') des ersten Hilfsantriebssystems (105) und/oder des zweiten Hilfsantriebssystems (105'), demzufolge die elektrischen Maschinen (51,52) und/oder die elektrischen Maschinen (51',52') als elektrische Generatoren zum Laden des Energiespeichersystems (106) und/oder des Energiespeichersystems (106') betrieben werden.

## Revendications

1. Véhicule articulé (1) pour le transport de passagers, ledit véhicule (1) comprenant au moins :
- une voiture avant (10) comprenant au moins un essieu avant directeur (12) et au moins un essieu entraîné (13) ;
- au moins une voiture arrière (20) raccordée à ladite voiture avant (10) par un premier joint articulé (18), ladite première voiture arrière (20) comprenant au moins un premier essieu opérationnel (23),
dans lequel ladite voiture avant (10) comprend un système d'entraînement principal comprenant un moteur thermique (100) dudit véhicule (1) qui entraîne ledit premier essieu entraîné (13), ledit système d'entraînement principal (100) comprenant au moins un groupe motopropulseur (8) raccordé de manière opérationnelle audit premier essieu entraîné (13) et **caractérisé en ce que** le véhicule articulé est sans aucune ligne d'entraînement allant de voiture à voiture et est modulaire comprenant une ou plusieurs voitures arrière (20),
dans lequel chaque voiture arrière (20, 20') comprend un premier système d'entraînement auxiliaire (105, 105') permettant d'entraîner ledit premier essieu opérationnel (23, 23') de ladite voiture arrière (20, 20'), ledit système d'entraînement auxiliaire (105, 105') comprenant :
- au moins une machine électrique (51, 52, 51', 52') couplée de manière opérationnelle audit premier essieu opérationnel (23, 23') ;
- un système de stockage d'énergie (106, 106') raccordé électriquement à ladite machine électrique (51, 52, 51', 52'), dans lequel, selon un premier mode de fonctionnement dudit système entraîné auxiliaire (105, 105'), ladite au moins une machine électrique est exploitée comme un générateur électrique pour charger ledit système de stockage d'énergie et dans lequel selon un second mode de fonctionnement, ladite au moins une machine électrique est exploitée comme un moteur électrique pour fournir de la puissance audit premier essieu opérationnel, et **en ce que** ladite voiture avant comprend un second essieu entraîné opérationnel (13') et au moins un appareil électrique (91, 91') raccordé audit second essieu entraîné opérationnel (13') pour fournir du couple audit second essieu entraîné opérationnel (13'), et un système de stockage d'énergie (94) raccordé électriquement à l'appareil électrique (91, 91'), dans lequel pendant un mode de freinage par récupération du véhicule, le système de stockage d'énergie est chargé par l'appareil électrique (91, 91') fonctionnant comme un générateur et sur demande de puissance/couple, le système de stockage d'énergie fournit de l'énergie électrique à l'appareil électrique.

2. Véhicule articulé selon la revendication 1, dans lequel ledit système d'entraînement auxiliaire (105) comprend deux machines électriques (51, 52) chacune agencée à une extrémité dudit premier essieu opérationnel (23).

3. Véhicule articulé (1) selon la revendication 1 ou 2, **caractérisé en ce que** ledit véhicule articulé comprend une première (20) et une seconde (20') voiture arrière raccordée à la première voiture arrière (20) au moyen d'un second joint articulé (18'), ladite seconde voiture arrière (20') comprenant un second essieu opérationnel (23') et **caractérisé en ce que** ladite seconde voiture arrière (20') comprend un second système d'entraînement auxiliaire (105') pour entraîner ledit second essieu opérationnel (23') de ladite seconde voiture arrière (20'), ledit second système d'entraînement auxiliaire (105') comprenant :
- au moins une machine électrique (51', 52') couplée de manière opérationnelle audit second essieu opérationnel (23') ;
- un second système de stockage d'énergie (106') raccordé électriquement à ladite au moins une machine électrique (51', 52') dudit second système d'entraînement auxiliaire, dans lequel selon un premier mode de fonctionnement dudit second système entraîné auxiliaire (105'), ladite au moins une machine électrique (51', 52') est exploitée comme un générateur électrique pour charger ledit second système de stockage d'énergie (106') et dans lequel selon un second mode de fonctionnement, ladite au moins une machine électrique (51', 52') est exploitée comme un moteur électrique pour fournir de la puissance audit second essieu opérationnel (23').

4. Véhicule articulé selon la revendication 3,
dans lequel ledit second système d'entraînement auxiliaire (105') comprend deux machines électriques (51', 52') dont chacune est agencée à une extrémité dudit second essieu opérationnel (23').

5. Véhicule articulé (1) selon la revendication 3 ou 4, dans lequel lesdits modes de fonctionnement dudit premier système d'entraînement auxiliaire (105) peuvent être activés/désactivés indépendamment des modes de fonctionnement dudit second système d'entraînement auxiliaire (105').

6. Véhicule articulé (1) selon l'une quelconque des revendications 2 à 5, dans lequel ledit premier système d'entraînement auxiliaire (105) comprend des premiers moyens d'actionnement (81) et des deuxièmes moyens d'actionnement (82) respectivement pour actionner une première machine électrique (51) et une deuxième machine électrique (52) dudit premier couple desdites machines électriques (51, 52), lesdits premiers moyens d'actionnement (81) et lesdits deuxièmes moyens d'actionnement (82) communiquant électriquement avec une unité centrale électronique UCE (300) dudit véhicule de manière à être exploitée en fonction des conditions de déplacement dudit véhicule (1).

7. Véhicule articulé (1) selon l'une quelconque des revendications 4 à 6, dans lequel ledit second système d'entraînement auxiliaire (105') comprend des troisièmes moyens d'actionnement (81') et des quatrièmes moyens d'actionnement (82') respectivement pour actionner une troisième machine électrique (51') et une quatrième machine électrique (52') dudit second couple desdites machines électriques (51', 52'), lesdits troisièmes moyens d'actionnement (81') et lesdits quatrièmes moyens d'actionnement (82') communiquant électriquement avec une unité centrale électronique UCE (300).

8. Véhicule articulé (1) selon la revendication 6 ou 7, dans lequel ladite UCE (300) est adaptée auxdits moyens d'actionnement (81, 82) selon les conditions de déplacement dudit véhicule (1) :
- lorsqu'une augmentation de puissance/couple est requise, alors ladite unité de commande électronique (300) envoie un premier signal de commande auxdits moyens d'actionnement (81, 82) et/ou auxdits moyens d'actionnement (81', 82') dudit premier système d'entraînement auxiliaire (105) et/ou dudit second système d'entraînement auxiliaire (105') à l'issue de quoi lesdites machines électriques (51, 52) et/ou lesdites machines électriques (51', 52') fonctionnent comme des moteurs électriques ; et
- lorsque la puissance/le couple fourni(e) par ledit système d'entraînement principal est suffisant(e) pour déplacer ledit véhicule (1), alors ladite unité de commande électronique (300) envoie un second signal de commande auxdits moyens d'actionnement (81, 82) et/ou auxdits moyens d'actionnement (81', 82') dudit premier système d'entraînement auxiliaire (105) et/ou dudit second système d'entraînement auxiliaire (105') à l'issue de quoi lesdites machines électriques (51, 52) et/ou lesdites machines électriques (51', 52') fonctionnent comme des générateurs électriques pour charger ledit système de stockage d'énergie (106) et/ou ledit système de stockage d'énergie (106').
